# EUROPÄISCHE PATENTSCHRIFT

(11) **EP 0 457 788 B1**
(45) Veröffentlichungstag und Bekanntmachung des Hinweises auf die Patenterteilung: **04.05.1994**
(21) Anmeldenummer: 90902616.3
(22) Anmeldetag: 11.02.1990
(51) Int. Cl.: G01N 27/20

(54) **VERFAHREN UND VORRICHTUNG ZUM ÜBERWACHEN DES AUFTRETENS ODER AUSBREITENS VON BRÜCHEN ODER RISSEN IN MATERIALIEN, WERKSTÜCKEN, BAUTEILEN, BAUWERKEN ODER HIMMELSKÖRPERN, INSBESONDERE IN ERDBEBENGEFÄHRDETEN GEBIETEN ODER BEI GEBIRGSBEWEGUNGEN IM TUNNELBAU**
PROCESS AND DEVICE FOR MONITORING THE OCCURRENCE OR SPREADING OF FRACTURES OR CRACKS IN MATERIALS, WORKPIECES, COMPONENT PARTS, STRUCTURES OR FLYING OBJECTS, IN PARTICULAR IN EARTHQUAKE-PRONE REGIONS OR MOVEMENT OF STRATA DURING TUNNELLING
PROCEDE ET DISPOSITIF POUR SURVEILLER L'APPARITION OU LA PROPAGATION DE FRACTURES OU DE FISSURES DANS DES MATERIAUX, PIECES, COMPOSANTS, STRUCTURES OU OBJETS VOLANTS, NOTAMMENT DANS DES REGIONS SUJETTES AUX TREMBLEMENTS DE TERRE OU LORS DE MOUVEMENTS DE TERRAIN PENDANT LA CONSTRUCTION DE TUNNELS

(30) Priorität: 13.02.1989 DE 8901608 U
(43) Veröffentlichungstag der Anmeldung: 27.11.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: LOVSE, Hermann, W-7864 Maulburg (DE); SENF, Hermann, W-7858 Weil am Rhein (DE); ZIMMERMANN, Gerd, W-7858 Weil am Rhein (DE); WINKLER, Siegfried, W-7800 Freiburg (DE)
(86) Internationale Anmeldenummer: DE9000087
(87) Internationale Veröffentlichungsnummer: WO9009582

(56) Entgegenhaltungen:
- DE-C- 3 612 651
- US-A- 4 656 595

## Beschreibung

Die Erfindung betrifft ein Verfahren und eine Vorrichtung zum Überwachen des Auftretens oder Ausbreitens von Brüchen oder Rissen in Materialien, Werkstücken, Bauteilen, Bauwerken oder Himmelskörpern, insbesondere in erdbebengefährdeten Gebieten oder bei Gebirgsbewegungen im Tunnelbau, bei dem in der Nähe des erwarteten Risses oder Bruches Veränderungen des elektrischen Feldes erfaßt und anschließend ausgewertet werden.

Zum frühzeitigen Erkennen von Materialversagen, beispielsweise in Kernkraftwerken, Hallen, Brücken, Gebäuden, Flugzeugen und sonstigen Fahrzeugen sind eine Vielzahl von Brucherkennungsverfahren bekannt. Bei der Potentialsondenmethode wird aus einem zunehmenden elektrischen Widerstand eines metallischen Bauteils auf eine Verlängerung des Strompfades und damit auf eine Rißerweiterung geschlossen (B. Voß et al., Rechnergestützte Verfahren zur Messung und Auswertung des Rißwachstums im Temperaturbereich von -180 bis +800°C, Materialprüfung 27 Nr. 12 1985).

Aus der US-A-4 656 595 sind ein Verfahren und eine Vorrichtung bekannt, die auf der Basis der Potentialsondenmethode arbeiten und mit Hilfe mehrerer elektrischer Kontaktpunkte an einem leitenden Material Verformungen des elektrischen Feldes im Material zu erfassen gestatten, wenn in diesem Material Fehler auftreten.

Ein Verfahren und eine Vorrichtung zum Erfassen der Form eines Risses, bei dem mittels Stromzuführungs-Sondenpaaren ein Gleichstrom an die Oberfläche eines Bauelementes angelegt und die Potentialverteilung an der Oberfläche abgetastet wird, ist auch in der DE-C-36 12 651 beschrieben.

Unter der Bezeichnung "Fracto-Emission" sind Verfahren bekannt, bei denen von Brüchen ausgehende Emissionen von Partikeln wie Elektronen, Ionen und Photonen (auch in Form von Infrarotstrahlung oder Radiowellen) erfaßt und ausgewertet werden (S.C. Langford et al., Simultaneous measurements of the electron and photon emission accompanying fracture of single-crystal MgO, Journal of Applied Physics 62(4), 15. August 1987, Seiten 1437 bis 1449).

Eine weitere Erkennungsmethode ist unter dem Begriff "Akustische Emission" (Schallemission) bekannt und nutzt aus, daß die bei einer Bruchentstehung freiwerdende elastische Energie in Form mechanischer Wellen in den Körper abgestrahlt wird (A.S. Crasto et al., Correlation of Photon and Acoustic Emission with Failure Events in Model Composites, Composites Science and Technology 30 (1987), Seiten 35 bis 58).

Aus der DE-C-33 34 570 ist ein Verfahren zur Bruchdetektion bekannt, das in Analogie zur akustischen Emission als magnetische Emission bezeichnet worden ist. Diese beruht auf der Veränderung der magnetischen Struktur von ferromagnetischen Werkstoffen wenn Bruchereignisse stattfinden. Diese sind mit Änderungen eines äußeren Magnetfeldes gekoppelt und können mit magnetischen Feldsonden erfaßt werden. Nachteilig bei dem bekannten Verfahren ist, daß es auf ferromagnetische Werkstoffe beschränkt ist.

Ausgehend von diesem Stand der Technik liegt der Erfindung die Aufgabe zugrunde, ein Verfahren und eine Vorrichtung zu schaffen, die es gestatten, auch andere als ferromagnetische Werkstoffe berührungslos, insbesondere im Hinblick auf ein drohendes Materialversagen, bezüglich des Auftretens und Ausbreitens von Brüchen und Rissen zu überwachen.

Diese Aufgabe wird bei einem Verfahren der eingangs genannten Art dadurch gelöst, daß Veränderungen des elektrostatischen Feldes außerhalb des zu überwachenden Materials mit einer hierfür geeigneten Sonde gemessen werden, und hochfrequente Teile des Meßsignals verstärkt werden.

Bei einer Vorrichtung gemäß dem Oberbegriff des Anspruchs 7 wird die Aufgabe erfindungsgemäß dadurch gelöst, daß die Sondenanordnung zur Erfassung von Veränderungen des elektrostatischen Feldes außerhalb des zu überwachenden Materials wenigstens ein metallisches Sondenelement oder ein Sondenelement mit ähnlich hoher elektrischer Leitfähigkeit aufweist, das vom zu überwachenden Material elektrisch isoliert ist und über einen Hochfrequenzverstärker mit der Aufzeichnungs- oder Auswerteeinheit verbunden ist.

Bei einer Weiterbildung des erfindungsgemäßen Verfahrens werden die Zeitpunkte, die Zeitdauer und die Häufigkeiten einzeln, zusammen oder in beliebiger Kombination bestimmt und ausgewertet, zu denen die elektrischen Feldveränderungen einen vorgegebenen Schwellenwert übersteigen. Bei einer vorteilhaften Ausgestaltung der Erfindung werden auch die Amplituden der elektrostatischen Feldveränderungen bestimmt und ausgewertet. Dabei ist es möglich, daß erfaßte Einzelereignisse aufsummiert, zeitlich registriert oder statistisch ausgewertet werden. Bei Erreichen eines vorgegebenen Grenzwertes wird bei einem vorteilhaften Ausführungsbeispiel der Erfindung ein Alarmsignal zum Anzeigen eines Gefahrenzustandes oder eines eingetretenen Schadens erzeugt.

Die Vorrichtung zur Durchführung des erfindungsgemäßen Verfahrens verfügt bei einem bevorzugten Ausführungsbeispiel über zwei im Abstand isoliert voneinander angeordnete metallische Sondenelemente in Gestalt von Drähten, Stäben, Folien, gekrümmten Schalen, Platten, Scheiben, Kugeln oder sonstigen Körpern, die jeweils paarweise an die beiden Eingänge eines Differenzverstärkers angeschlossen sind.

Dabei ist es vorteilhaft, wenn dem Verstärker ein Hochpaßfilter mit einer Grenzfrequenz von mehr als 100 kHz und/oder ein Störsignalsperrfilter vorgeschaltet sind. Auf diese Weise werden niederfrequente Störsignale sowie besonders stark einfallende Strahlung von Rundfunksendern am Verstärkereingang unterdrückt.

Der Ausgang des Verstärkers kann an einen Transientenrecorder, einen Computer zur automatischen Auswertung und/oder einen Oszillographen zur manuellen Auswertung angeschlossen sein.

Bei einer automatischen Auswertung ist es vorteilhaft, wenn im Verstärker ein Amplitudendiskriminator und ein Pulsformer nachgeschaltet sind. Die durch den Pulsformer geformten Impulse beaufschlagen bei einem Ausführungsbeispiel der Erfindung einen Zähler, dem ein Rechner mit Peripheriegeräten, insbesondere einer Alarmanzeige zugeordnet sind.

Gemäß einer Ausgestaltung der Erfindung ist es möglich, mehrere an unterschiedliche Überwachungsstellen angeordnete Sonden über eine ODER-Schaltung oder einen Multiplexer an den Zähler und/oder den Rechner anzuschließen. Auf diese Weise können Informationen über die räumliche Verteilung der beobachteten Ereignisse gewonnen werden.

Die Sondenelemente der erfindungsgemäßen Vorrichtung können in der Nähe von bruchgefährdeten Teilen eines Daches oder einer Dachkonstruktion eines Gebäudes angeordnet sein. Wenn das gefährdete Teil im Querschnitt rund ausgebildet ist, ist es zweckmäßig, die Sondenelemente als Halbschalenpaar auszubilden, das das gefährdete runde Teil entlang dessen Mantel umfaßt.

Für die Ausgestaltung und Form der Sondenelemente ergeben sich zahlreiche Möglichkeiten. Insbesondere können die Sondenelemente als im Abstand nebeneinander angeordnete Platten auf einem isolierten Trägermaterial aufgebracht oder in einem Gießmaterial eingegossen sein. Gemäß einem Ausführungsbeispiel der Erfindung sind die Sondenelemente als gekrümmte Elektrodenbleche ausgebildet, die sich entlang dem Mantel eines gefährdeten runden Teils erstrecken. Dabei ist es möglich, die Elektrodenbleche in Längsrichtung des runden Teils axial versetzt anzuordnen, wenn der Rißverlauf hauptsächlich quer zur Längsachse und nicht in Richtung der Längsachse des runden Teils erwartet wird.

Bei einem weiteren Ausführungsbeispiel bestehen die Sondenelemente aus zwei symmetrisch zueinander ausgebildeten Körpern, zwischen denen eine der Form des zu überwachenden Teils angepaßte Ausnehmung vorgesehen ist.

Die Erfindung gestattet insbesondere die laufende Überwachung von Brücken, wobei in einem derartigen Fall die Sondenelemente in der Nähe kritischer Stellen, insbesondere einer Betonbrücke, angeordnet sind. Insbesondere können die Sondenelemente auf dem Außenmantel eines Brückenpfeilers angebracht werden. Eine andere Möglichkeit besteht darin, die Sondenelemente in Leerrohre unterzubringen, die beim Erstellen der Brückenkonstruktion vorgesehen worden sind. Es ist auch möglich, die Sondenelemente beim Gießen einer Betonbrücke einzugießen.

Eine besonders zweckmäßige Form der Sondenelemente für die Erdbebenüberwachung und Überwachung von Gebirgsbewegungen sieht vor, daß das eine der Sondenelemente als Kugel und das andere als Ringblech ausgebildet ist, wobei die Kugel auf der Ringachse im Abstand von der Ringebene angeordnet ist.

Die Erfindung wird nachfolgend anhand der Zeichnung näher beschrieben. Es zeigen:
- Fig. 1: ein Blockschaltbild zur Veranschaulichung des erfindungsgemäßen Verfahrens,
- Fig. 2: den grundsätzlichen Aufbau einer Vorrichtung zur Durchführung des Verfahrens,
- Fig. 3: ein Blockschaltbild der Eingangsstufen der erfindungsgemäßen Vorrichtung,
- Fig. 4: ein Blockschaltbild der den in Fig. 3 veranschaulichten Stufen nachgeschalteten Stufen der erfindungsgemäßen Vorrichtung,
- Fig. 5: eine Dachkonstruktion mit schematisch eingezeichneten Vorrichtungen gemäß der Erfindung zur Veranschaulichung möglicher Einsatzorte,
- Fig. 6: eine Seitenansicht einer Vorrichtung für Zug- und Druckversuche mit zwei schalenförmigen Sondenelektroden,
- Fig. 7: die Vorrichtung gemäß Fig. 6 im Schnitt entlang der Linie VII-VII,
- Fig. 8: eine perspektivische Ansicht von Sondenelementen für einen feststehenden Rundstab,
- Fig. 9: eine perspektivische Ansicht der Gestalt von Sondenelementen, insbesondere für drehende Rundstäbe,
- Fig. 10: ein weiteres Ausführungsbeispiel für die Ausgestaltung der Sondenelemente für Wellen, Seile und Rohrleitungen,
- Fig. 11: einen Querschnitt durch eine Brücke mit schematisch eingezeichneten Vorrichtungen gemäß der Erfindung,
- Fig. 12: einen Brückenpfeiler mit im Übergangsbereich auf dessen Mantel aufgebrachten Sondenelementen,
- Fig. 13: einen Querschnitt durch eine Wand und eine Betondecke mit einer in einem Leerrohr untergebrachten Sonde,
- Fig. 14: eine Betondecke mit eingegossenen Elektrodenblechen,
- Fig. 15: den Kopf einer Erdbebensonde,
- Fig. 16: die Sondenelemente der Erdbebensonde gemäß Fig. 15 in einer gesonderten und etwas vergrößerten Darstellung und
- Fig. 17: eine Vorrichtung gemäß Fig. 2, die zusätzlich über eine Einrichtung zum Anlegen eines elektrischen Gleichfeldes im Brucherwartungsbereich verfügt.

Dem erfindungsgemäßen Verfahren sowie der erfindungsgemäßen Vorrichtung liegt die Erkenntnis zugrunde, daß das Brechen aller Stoffe von der Entstehung elektrischer Felder bzw. von der Änderung bereits bestehender elektrischer Felder begleitet ist. Diese elektrischen Vorgänge werden gemäß der Erfindung im Zusammenhang mit Bruchereignissen erkannt, dargestellt und in sofortige Warnsignale umgewandelt. In Anlehnung an die Verfahren der akustischen Emission und der magnetischen Emission kann das der Erfindung zugrunde liegende Verfahren als elektrische Emission, bezeichnet werden, da dieses ähnlich wie die bekannten Emissionen ein Fernwirkungsverfahren ist. Da die elektrischen Felder bei allen Stoffen emittiert werden, unterliegt die elektrische Emission im Gegensatz zum Verfahren der magnetischen Emission keinerlei Beschränkungen auf bestimmte Werkstoffe. Mit dem nachfolgend beschriebenen Verfahren und der nachfolgend beschriebenen Vorrichtung können daher Rißentstehungen bei allen metallischen und nichtmetallischen, leitenden und nichtleitenden, homogenen und inhomogenen Werkstoffen und Bauteilen, bei dynamischen und statischen (kurzzeitigen und Dauer-) Belastungsvorgängen erfaßt werden. Es ist somit möglich, die Bruchsicherheit von Konstruktionen zu überwachen und in der Werkstofforschung den Einsatz von Rißinstabilitäten festzustellen.

Das Verfahren und die Vorrichtung können an Bauteilen und Proben aus allen Werkstoffen eingesetzt werden, insbesondere auch an Nichtmetallen, zum Beispiel Glas, Kunststoffen, Keramik, Faser- und faserverstärkten Werkstoffen, Laminaten und Kompositen.

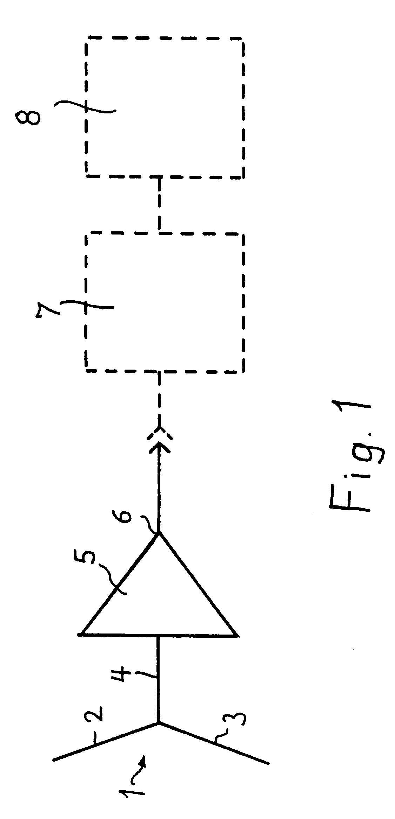

Fig. 1 zeigt schematisch einige zur Durchführung des erfindungsgemäßen Verfahrens einsetzbare Baugruppen.

Eine antennenartig aufgespannte Feldsonde 1 mit einem ersten Sondenelement 2 und einem zweiten Sondenelement 3 dient zur Erfassung von Potentialdifferenzen und damit elektrischen Feldstärkeschwankungen. Die mit den beiden Sondenelementen 2 und 3 ausgestattete Feldsonde 1 ist über eine Doppelleitung 4 mit den Eingängen eines Differenzverstärkers 5 verbunden. Der Differenzverstärker 5 verstärkt die von den Sondenelementen 2, 3 erfaßten Potentialdifferenzen infolge von Feldstärkeschwankungen. Die dabei auftretenden Spannungen können im Bereich zwischen einigen Mikrovolt und einigen Volt liegen. Bei dem Differenzverstärker 5 kann es sich um einen logarithmischen Verstärker handeln, um die Weiterverarbeitung eines hohen Dynamikbereichs zu gestatten.

Der Ausgang 6 des Differenzverstärkers 5 liefert Signale, die unmittelbar mit Hilfe eines Qszillographen beobachtet werden können, oder die zur Weiterverarbeitung einen Transientenrecorder 7 speisen. Der Transientenrecorder 7 kann online oder zeitversetzt mit einem Computer 8 zur Weiterverarbeitung der vom Differenzverstärker 5 gelieferten Signale verbunden sein.

Die dem Differenzverstärker 5 nachgeschalteten elektronischen Geräte registrieren den Zeitpunkt des Eintritts eines Rißereignisses sowie seine Amplitude und Dauer. Außerdem gestattet es die in Fig. 1 dargestellte Anordnung, die Einzelereignisse aufzusummieren. Diese Daten können jederzeit abgerufen und weiterverarbeitet werden. Schließlich ist es mit Hilfe des Computers 8 möglich, nach Überschreitung von vorgegebenen Schwellwerten Alarmsysteme anzusteuern.

Das erfindungsgemaße Verfahren sowie die in Fig. 1 schematisch dargestellte Vorrichtung zur Riß- und Schadenserfassung gestattet aber nicht nur das Erfassen des Zeitpunktes des Eintritts von Einzelrißereignissen, sondern auch von mehreren Rissen. Entsprechendes gilt für die Amplitude beim Auftreten von mehreren Rissen, die der Stärke des Schadensausmaßes zugeordnet ist. Durch das Registrieren der Dauer der Rißereignisse ergibt sich eine weitere Möglichkeit, die Schadensbildung zu bewerten.

Durch eine Aufsummierung der einzelnen Ereignisse kann ein Fortschreiten des Schadensausmaßes zeitlich registriert werden. Die mit der Vorrichtung gemäß Fig. 1 erfaßten Daten können zur Bewertung des augenblicklichen Schadenszustandes herangezogen werden, wobei der zeitliche Verlauf beim Festsetzen eines Schwellwertes zur Auslösung eines Alarmsystems berücksichtigt werden kann.

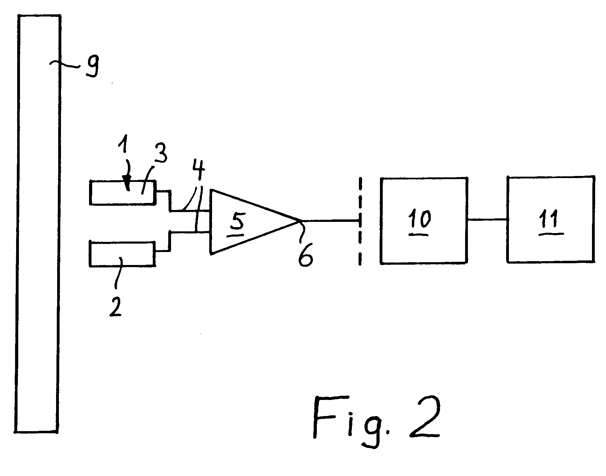

Fig. 2 zeigt einen der Fig. 1 im wesentlichen entsprechenden Aufbau, wobei jedoch zur Verdeutlichung der zu prüfende Körper 9 sowie die beiden Sondenelemente 2, 3 mit getrennten Einzelleitungen der Doppelleitung 4 zu den Eingängen des Differenzverstärkers 5 gesondert dargestellt sind. Man erkennt in Fig. 2, daß sich die Feldsonde 1 in der Nähe des zu prüfenden Körpers 9 befindet, so daß es ihr möglich ist, Änderungen elektrischer Potentialdifferenzen zu erfassen. Die Sondenelemente 2, 3 bestehen beispielsweise aus zwei leitfähigen Platten oder Stäben, die in einem Abstand voneinander isoliert angeordnet sind, so daß sie ein unterschiedliches elektrisches Potential annehmen, wenn elektrische Felder auftreten. Die Änderung der Potentialdifferenz zwischen dem ersten Sondenelement 2 und dem zweiten Sondenelement 3 wird vorzugsweise einem hochohmigen Differenzverstärker 5 zugeführt, der ein niederohmiges Signal an seinem Ausgang 6 erzeugt. Die Anordnung ist dabei so getroffen, daß der Eingangskreis das Meßsignal mit großer Zeitkonstante möglichst naturgetreu erfaßt. Das am Ausgang 6 anliegende Ausgangssignal kann statt mit einem Computer auch mit einer sonstigen Elektronik 10 weiterverarbeitet werden und/oder zur Auslösung eines Warnsignalgebers 11 genutzt werden. Ein Versagen des zu prüfenden Körpers 9 ist zu erwarten, wenn die Zahl bzw. die Rißlängen bestimmte kritische Werte überschreiten. Ist dies der Fall, tritt der Warnsignalgeber 11 in Aktion.

Obwohl in Fig. 2 ein erstes Sondenelement 2 und ein zweites Sondenelement 3 dargestellt sind, wird darauf hinwiesen, daß eines der Sondenelemente 2, 3 durch die Geräte- oder Systemerde ersetzt werden kann. In diesem Falle muß der Verstärker keinen Differenzeingang besitzen.

Beispiele für Werkstoffversagen sind Brüche an Betonbauten, Kesseln, Leitungen und Druckgefäßen nach Explosionen, kriminellen Anschlägen, Schädigungen durch Erdbeben und als Folge von Dauerschwingbelastungen durch Maschinen. Andere Beispiele für Werkstoffversagen sind das Einstürzen von Hallen und Brücken, das Einstürzen und Abreißen von Decken, Schädigungen an Säulen und Pfeilern sowie Schädigungen an unterirdischen Bauwerken wie Bergwerken.

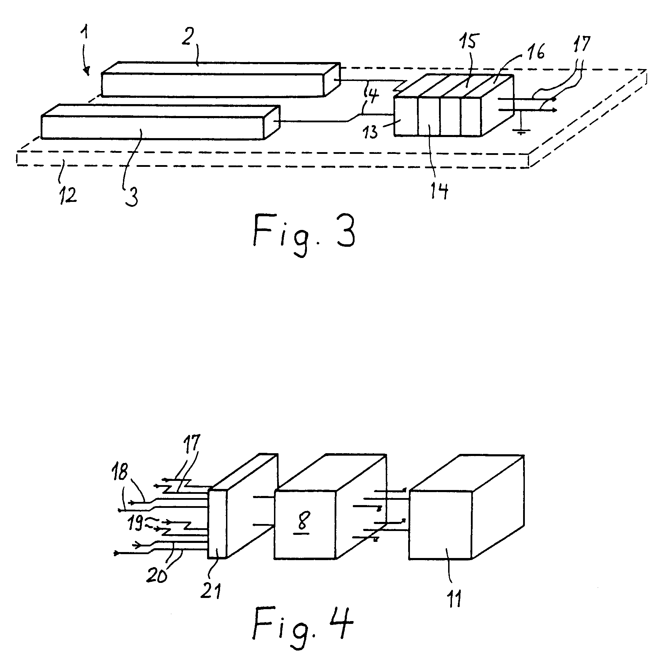

Fig. 3 zeigt perspektivisch und schematisch zwei stabförmige Sondenelemente 2, 3, die auf einer isolierenden Trägerplatte 12, welche zum Beispiel aus Epoxyharz besteht, im Abstand voneinander und parallel zueinander ausgerichtet befestigt sind. Statt der in Fig. 3 dargestellten geraden Sondenelemente 2, 3, können auch an die zu überwachende Bauteilfläche angepaßte gekrümmte Sondenelemente 2, 3 vorgesehen sein, um einen Feldänderungssensor oder eine Feldsonde 1 zu bilden.

Die Sondenelemente 2, 3 sind über eine Doppelleitung 4, die üblicherweise massefrei ist, mit einem als ersten Block dargestellten Hochpaßfilter 13 verbunden. Das Hochpaßfilter hat eine untere Grenzfrequenz ≧ 100 kHz. Der mit dem Bezugszeichen 13 versehene Block kann neben einem Hochpaßfilter auch ein Sperrfilter für Störsignale enthalten, die beispielsweise von benachbarten Fremdsendern herrühren können. Durch das Hochpaßfilter 13 wird erreicht, daß niederfrequente Störsignale von den hochfrequenten Bruch- und Rißsignalen gut getrennt werden können.

Dem Hochpaßfilter 13 ist ein Hochfrequenzverstärker 14 nachgeschaltet, der besonders breitbandig ist und mit seinem Ausgangssignal einen Diskriminator 15 speist, mit dessen Hilfe Amplituden unterhalb eines vorgegebenen Schwellenwertes in der Art eines Schwellenwertdetektors unterdrückt werden. Am Ausgang des Diskriminators 15 liegen somit nur noch elektrische Signale an, die Rissen und Feldänderungen zugeordnet sind, welche eine vorgegebene Amplitude übersteigen.

Dem Diskriminator 15 ist ein Pulsformer 16 nachgeschaltet, der beispielsweise eine monostabile Schaltung enthalten kann, die aus den eingehenden Signalen Rechteckimpulse gleicher Amplitude mit einer Länge zwischen einer Nanosekunde und 100 Mikrosekunden formt. Der Pulsformer 16 kann einen Entkoppler zur Impedanzwandlung enthalten. Leitungen 17, von denen eine mit der Masse verbunden sein, kann, gestatten den Anschluß an entfernter liegende weitere Baugruppen. Die Doppelleitung 4 ist vorzugsweise wesentlich, kürzer als die Leitungen 17, da die auf der Doppelleitung 4 auftretenden Spannungen wesentlich kleiner als die auf den Leitungen 17 auftretenden Spannungen sind.

Die Sondenelemente 2, 3 können auch eine in Fig. 3 nicht erkennbare Form, nämlich die Form zweier Blechquadrate haben, die zum Beispiel im Abstand von einem Zentimeter nebeneinander angeordnet sind und jeweils eine Länge von sechs und eine Breite von zwei Zentimeter haben.

Fig. 4 veranschaulicht einen Auswerteteil, der entweder in unmittelbarer Nähe des in Fig. 3 dargestellten Sondenteils oder an einem etwas weiter entfernt gelegenen Ort vorgesehen ist. Die Leitungen 17 können als Kabel oder als Glasfaser realisiert sein. In Fig. 4 erkennt man neben den Leitungen 17 weitere Leitungen 18, 19 und 20, die von weiteren Sondenteilen entsprechend dem in Fig. 3 dargestellten Sondenteil Signale an den in Fig. 4 dargestellten Auswerteteil heranführen.

Die Leitungen 17 bis 20 sind an die Eingänge eines Überlagerers 21 angeschlossen, der einen Multiplexer oder ein ODER-Glied enthalten kann, um die Signale auf den Leitungen 17 bis 20 zusammenzuführen oder zu addieren. Außerdem enthält der mit dem Bezugszeichen 21 versehene Schaltungsblock der Fig. 4 noch einen Zähler, der es gestattet, die über die Leitungen 17 bis 20 eintreffenden Impulse zu saldieren. Der Zählerstand des Zählers ist dabei jeweils ein Maß für die Zahl der erfaßten Riß- und Bruchereignisse. Die zeitliche Veränderung des Zählerstandes gibt dabei neben dem Zählerstand als solchen eine Möglichkeit einer einfachen Mustererkennung, um gegebenenfalls erforderliche Maßnahmen einzuleiten.

Wenn die Auswertung auf einem komplizierteren Algorithmus beruht ist es zweckmäßig, dem Überlagerer 21 eine Datenverarbeitungsanlage oder einen Computer 8 zuzuordnen, der mit geeigneten Programmen zur Mustererkennung ausgerüstet ist. Der Rechner 8 verfügt über eine Vielzahl von Ausgängen zu unterschiedlichen Peripheriegeräten und anderen Baugruppen, die gegebenenfalls in größerer Entfernung vom Rechner 8 aufgestellt sind.

In Fig. 4 erkennt man als Peripheriegerät einen Alarmgeber 11, der es gestattet, akustische oder optische Signale zur Gefahrenszustands- und Schadensanzeige auszugeben.

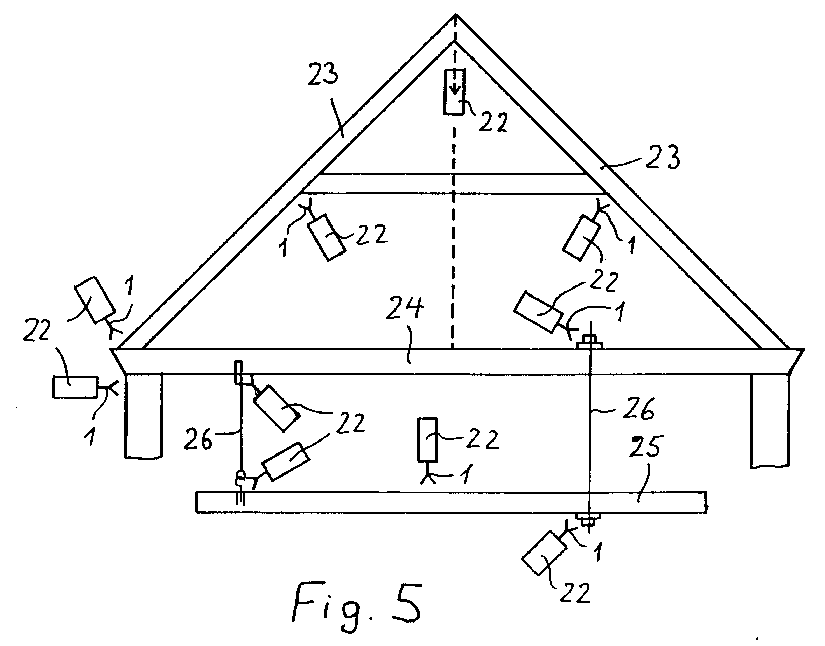

Fig. 5 zeigt Anwendungsbeispiele für eine Vorrichtung, die gemäß den Figuren 1 bis 4 aufgebaut ist, wobei in Fig. 5 jeweils Rechtecke an unterschiedlichen Stellen angebrachte Sonden 22 mit jeweils einer Y-förmigen Feldsonde 1 darstellen. Weiter sind in Fig. 5 eine Dachträgerkonstruktion 23, eine Decke 24 und eine abgehängte Decke 25 zur Veranschaulichung einer Anwendung des erfindungsgemäßen Verfahrens und der erfindungsgemäßen Vorrichtung zur Überwachung und/oder zur Meldung einer Rißentstehung dargestellt. Der Dachträgerkonstruktion 23 sind, wie in Fig. 5 erkennbar, mehrere Sonden 22 zugeordnet, wobei die Sonden 22 jeweils kritische Bereiche der Dachträgerkonstruktion 23 überwachen.

Man erkennt in Fig. 5 weiterhin, wie die über Verbindungselemente 26 abgehängte Decke 25 überwacht wird.

Auch den Verbindungselementen 26 und der abgehängten Decke 25 sind an einigen Stellen Sonden 22 mit der bereits oben beschriebenen Elektronik zugeordnet, die die Rißüberwachung an dem Bauwerk übernimmt.

Die im Bereich der Decke und der abgehängten Decke 25 angeordneten Sonden 22 dienen zur Überwachung von Aufhängeelementen, wie zum Beispiel Dübeln, Schrauben, Drähten, Spannern sowie der Decken 25 und 24 selbst. Die von den Sondenelementen 2, 3 der Feldsonden 1 erfaßten Feldänderungen werden in der im Zusammenhang mit den Figuren 1 bis 4 beschriebenen Weise erfaßt und ausgewertet, um gegebenenfalls Warneinrichtungen auszulösen. Die Decke 24 und die abgehängte Decke 25 können aus Beton bestehen, während die Verbindungselemente 26 metallische Teile und Kunststoffteile enthalten. Durch ein Zusammenschalten der verschiedenen Sonden 22 kann nicht nur eine Rißentstehung sondern auch die zeitliche und räumliche Ausbreitung eines Schadens an einem Bauwerk verfolgt werden.

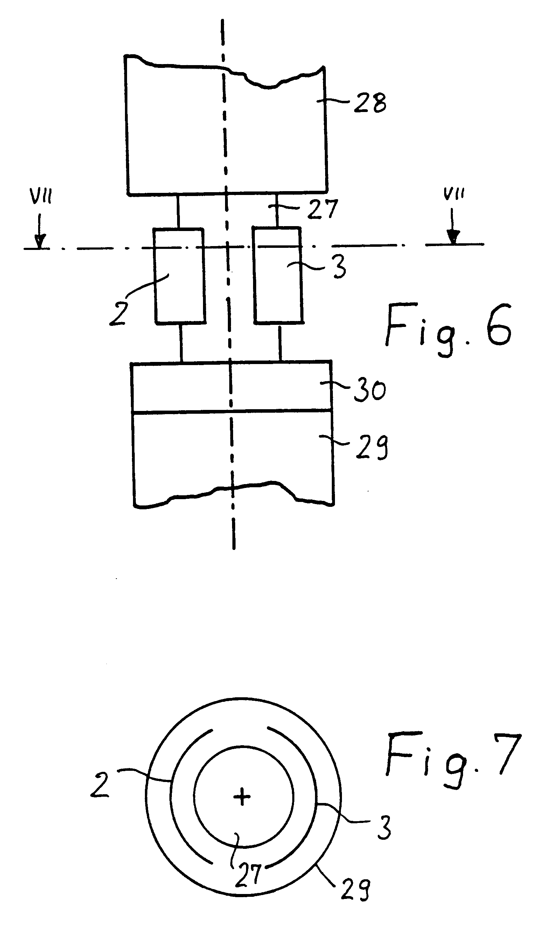

Fig. 6 veranschaulicht eine Vorrichtung für einen Zug- oder Druckversuch mit einer berührungslosen Erfassung des Rißstartes. Auf einer Probe 27 wirken über einen oberen Druckstempel 28 und einen unteren Gegenstempel 29 Kräfte ein, wobei zwischen der Probe 27 und dem unteren Gegenstempel 29 eine piezoelektrische Kraftmeßdose 30 vorgesehen ist, die insbesondere eine Zuordnung der im erfindungsgemäßen Verfahren gemessenen und ausgewerteten elektrischen Feldstärkeschwankungen und dem Kraftverlauf an der Probe 27 ermöglicht.

Zur Erfassung des Rißstartes befinden sich in der Mitte der Probe 27 ein halbzylinderförmiges erstes Sondenelement 2 und ein zweites halbzylinderförmiges Sondenelement 3. Die Sondenelemente 2, 3 stehen dabei mit der Probe 27 nicht in Berührung.

Fig. 7 zeigt schematisch eine Draufsicht auf die entlang der Linie VII-VII geschnittene Probe 27 sowie die Sondenelemente 2, 3 aus gekrümmten Metallblechen und den unteren Gegenstempel 29 der Druck- oder Zerreißmaschine.

Die Sondenelemente 2, 3 sind mit einem in den Fig. 6 und 7 nicht dargestellten Vorverstärker, insbesondere einem Differenzverstärker, verbunden, dessen Eingangswiderstand drei Kiloohm und dessen Grenzfrequenz zwei MHz beträgt. Der Vorverstärker kann an einen Transientenrecorder mit einer Taktrate von einer Mikrosekunde und einem Personalcomputer angeschlossen sein.

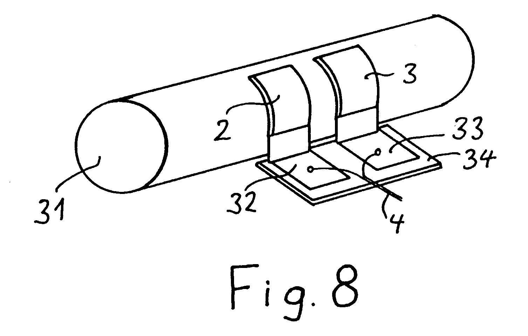

Fig. 8 zeigt ein Ausführungsbeispiel für Sondenelemente 2, 3 für einen feststehenden Rundstab 31, den es zu überwachen gilt. Der Rundstab 31 kann auch durch eine Rohrleitung, eine Stange oder ein Seil ersetzt sein. Die Sondenelemente 2, 3 sind in der Nähe des Rundstabs 31 in axialer Richtung des Rundstabs 31 versetzt angeordnet und haben die in Fig. 8 erkennbare gekrümmte Gestalt, die der Mantelkrümmung des Rundstabes 31 angepaßt ist. Die Sondenelemente 2, 3 verfügen über abgewinkelte Enden 32, 33 die auf einer Isolierplatte 34 befestigt sind und über eine Doppelleitung 4 in Gestalt zweier Anschlußdrähte mit der nachfolgenden elektronischen Schaltung verbunden sind. Die Ausgestaltung gemäß Fig. 8 ist besonders dann von Vorteil, wenn ein Riß quer zur Längsachse im Bereich zwischen den Sondenelementen 2, 3 erwartet wird.

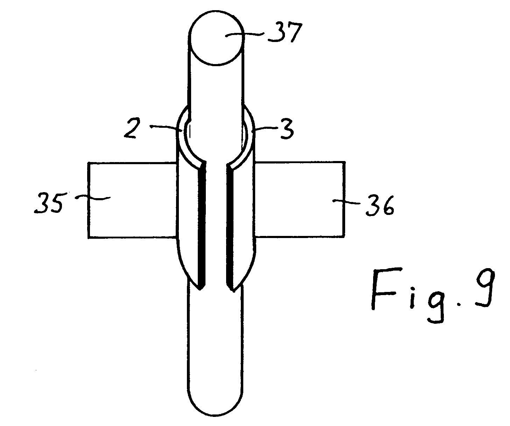

Fig. 9 veranschaulicht Sondenelemente 2, 3 mit zugeordneten Halterungen 35, 36 die im Gegensatz zu Fig. 8 nicht nebeneinander sondern gegenüberliegend angeordnet sind und für einen drehenden Rundstab 37 besonders zweckmäßig sind. Zwischen den Sondenelementen 2, 3 und dem Mantel des drehenden Rundstabs 37 befindet sich ein Luftspalt zur Isolierung.

Die in Fig. 9 dargestellt Anordnung kann bei vielen schnell rotierenden, sich bewegenden Bauteilen, insbesondere Wellen, Räder, Stangen, Ketten usw., verwendet werden. Dadurch ergeben sich Anwendungsbeispiele bei Hubschrauberrotoren (Verbindungselemente Rotor-Achse), Rotoren von Windkraftwerken, Ultrazentrifugen (Materialermüdung der Rotationskörper), Pleuel- und Steuerstangen sowie Steuerketten. Bei derartigen Bauteilen ist es zweckmäßig, die Sondenelemente in Form von Halbschalen bzw. Schalenelementen vorzusehen, die an einem ruhenden Teil der Konstruktion angebracht sind.

Die Sondenelemente 2, 3 können auch als einzelne oder mehrere isolierte Kupferdrähte unterschiedlicher Längen vorgesehen sein, die je nach Beanspruchungsart als Element der Kabelseele eines Drahtseils eingebaut oder entlang dem Umfang eines zu überwachenden Drahtseils angeordnet sind. Derartige Drahtseile werden bei Förderanlagen, Seilbahnen, Kränen, Hängebrücken, Deckenaufhängungen und als Abfangseile verwendet.

Bei einem weiteren in der Zeichnung nicht dargestellten Ausführungsbeispiel zum Überwachen von Versorgungsleitungen für flüssige und gasförmige Stoffe sowie für Behälter werden einzelne Kupferdrähte, die innen oder außen von den Rohrleitungen verlegt sind, oder Drähte in Form von Schleifen oder Ringen, die um die Rohrleitungen oder die zu überwachenden Behälter herumgeführt sind, verwendet.

Ringförmige Sondenelemente 2, 3 können bei Fahrzeugen, wie Flugzeugen, Hubschraubern und Schiffen entlang deren Spanten vorgesehen sein, um diese laufend zu überwachen.

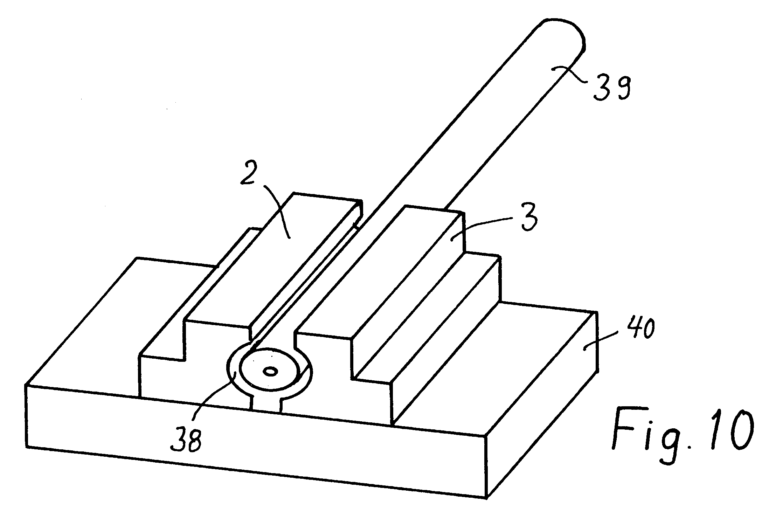

Fig. 10 veranschaulicht Sondenelemente 2, 3, die als massive Körper mit einer zylinderförmigen Ausnehmung 38 zur Aufnahme einer Welle, eines Seiles oder einer Rohrleitung 39 ausgebildet sind. Die Sondenelemente 2, 3 befinden sich auf einer massiven Grundplatte 40, die als Halterung der Feldsonde dient.

Da das erfindungsgemäße Verfahren sowie die erfindungsgemäße Vorrichtung auf das Auftreten von Rissen in beliebigen Materialien ansprechen, können insbesondere Betonbrücken kostengünstig und sicher überwacht werden.

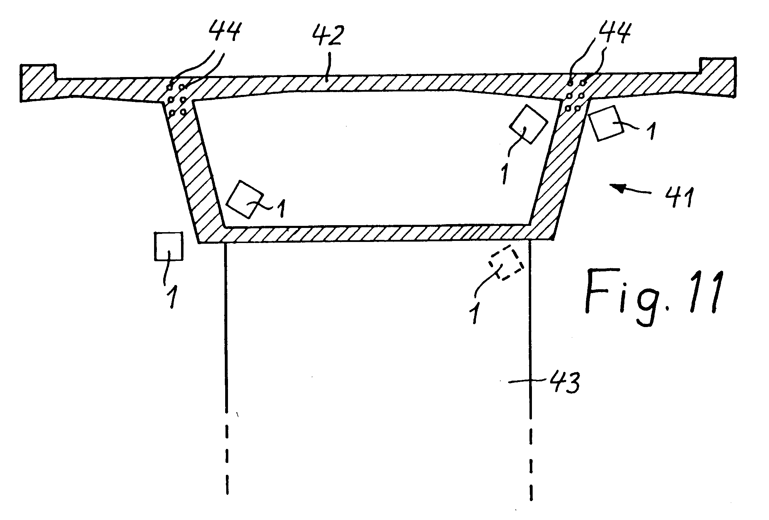

Fig. 11 zeigt im Querschnitt eine Brücke 41 mit einer Betonstraße 42 in einer Kastenkonstruktion und mit einem Betonpfeiler 43.

In der Nähe des oberen rechten Endes des Betonpfeilers 43 ist eine eingegossene Feldsonde 1 vorgesehen, um Risse im Übergangsbereich zwischen dem Pfeiler 43 und der Kastenkonstruktion der Brücke 41 zu überwachen. In Fig. 11 weiter links erkennt man zwei Feldsonden 1, die als Quadrate mit unterschiedlicher Orientierung dargestellt sind und die entsprechend der Rißvorzugsrichtung auftretenden Risse optimal erfassen.

Etwas höher und weiter rechts erkennt man in Fig. 11 zwei Feldsonden 1, von denen die eine innerhalb und die andere außerhalb des Kastens unmittelbar unter der Betonstraße 42 angeordnet ist. Die Feldsonden 1 sind nachträglich in Aufputz- und Anbauversion auf dem Beton der Betonbrücke 41 befestigt worden.

In Fig. 11 erkennt man weiterhin durch kleine Kreise veranschaulichte Leerrohre 44, die zur Aufnahme von leicht auswechselbaren Feldsonden 1 dienen können.

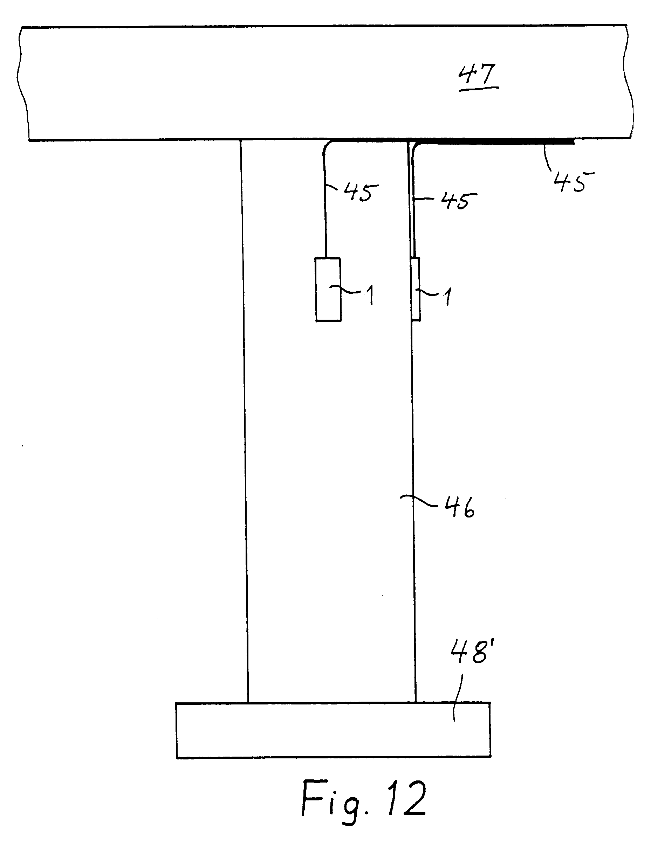

Fig. 12 veranschaulicht eine Aufputz-Montage zweier Feldsonden 1 zusammen mit Anschlußkabeln 45 auf einem Pfeiler 46, der eine Betondecke 47, einen Träger oder ein sonstiges Teil abstützt. Der Pfeiler 46 ruht auf einer Fundamentplatte 48. Die Feldsonden 1 sind im Übergangsbereich des Pfeilers 46 zusammen mit einem Teil der im Zusammenhang mit den Figuren 1 bis 4 beschriebenen Elektronik angeordnet. Zur Aufbringung der Feldsonden 1 bedarf es keiner besonderen Vorbereitungen bzw. Maßnahmen, wie sie erforderlich sind, wenn Dehnungsmeßstreifen angebracht werden. Die Feldsonden 1 sind vorzugsweise so orientiert, daß sie in Richtung des zu prüfenden bzw. überwachenden Bereichs zeigen. Eine aufwendige Justierung ist nicht erforderlich.

Für das Anbringen der Feldsonden 1 lassen sich drei Einsatzarten voneinander unterscheiden. Bei der ersten Einsatzart wird die Vorrichtung an fertiggestellten Bauten an gewünschten Plätzen als Aufputzversion angebracht. Eine zweite Einsatzart besteht darin, die Vorrichtung durch Kanäle, zum Beispiel Leerrohre, nachträglich einzuführen und zu positionieren, wobei die Leerrohre in die Betonbauelemente mit der Armierung verlegt worden sind. Die dritte Möglichkeit besteht darin, die Sonden und unter Umständen auch ein Teil der Elektronikelemente zusammen mit der Armierung in dem Bauwerk zu verlegen und im Beton einzugießen.

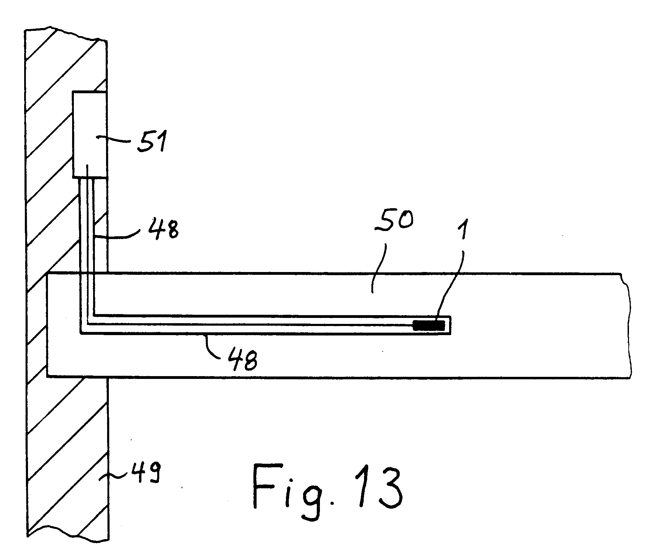

Fig. 13 veranschaulicht ein Leerrohr 48, das sich entlang einer Wand 49 und schließlich entlang einer Betondecke 50, ausgehend von einer Anschlußdose 51 erstreckt. Die Anschlußdose 51 befindet sich in der aufrechtstehenden Betonwand 49, während die Feldsonde 1 im Bereich des Endes des Leerrohres 48 in der Betondecke 50 liegt. Der Ort der Feldsonde 1 ist dabei so gewählt, daß sie in der Nähe des kritischen Ortes ruht. Die Anschlußleitung zwischen der Feldsonde 1, gegebenenfalls mit der zugehörigen Verstärkerschaltung, und der Anschlußdose 51 ist möglichst kurz.

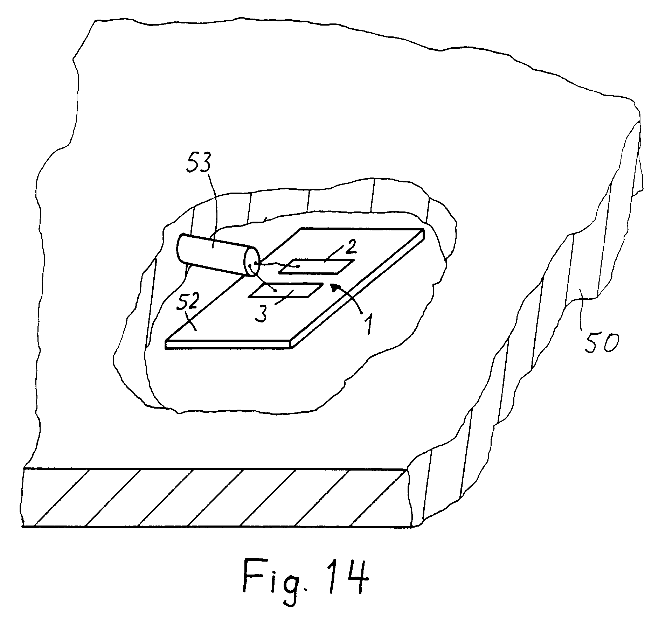

Fig. 14 veranschaulicht ein Beispiel für die weiter oben erwähnte dritte Einsatzart oder Einbauart, bei der die Feldsonde 1 mit den Sondenelementen 2, 3 in Kunststoff vergossen wird und bei der Fertigstellung der Betondecke 50 in diese eingegossen wurde. Wie man in Fig. 14 erkennt, befinden sich die flachen Sondenelemente 2, 3 auf einer flächig ausgedehnten Montageplatte 52 aus nichtleitendem Kunststoff. Die Sondenelemente 2, 3 sind über ein abgeschirmtes zweiadriges Kabel 53 mit einer Elektronik verbunden, die im Abstand von einigen Zentimetern bis wenigen Metern angeordnet ist. Die den Sondenelementen 2, 3 zugeordnete Elektronik kann in unmittelbarer Nähe als integrierte Elektronik vorgesehen sein.

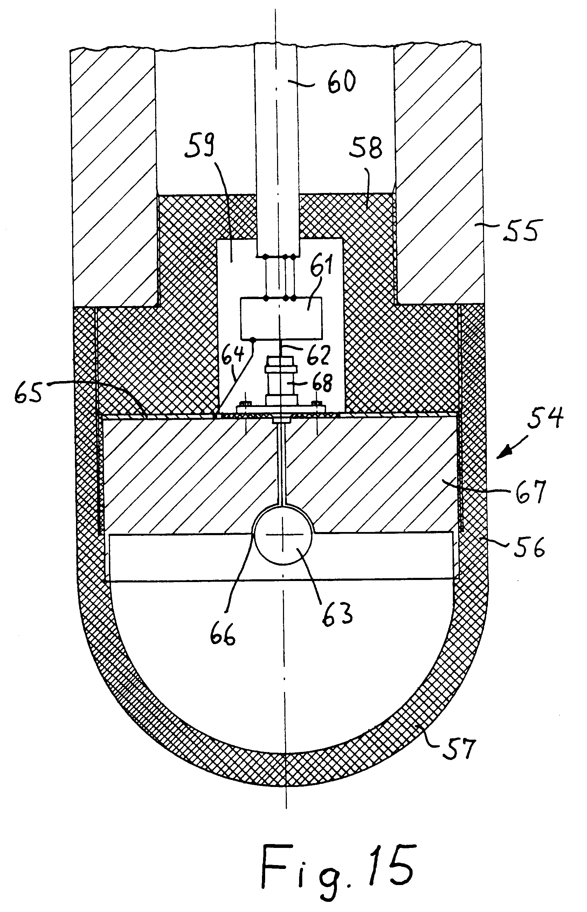

Fig. 15 zeigt den Aufbau eines Sondenkopfes 54, der zur Beobachtung von Gebirgsbewegungen im Tunnelbau sowie zur Erdbebenvorhersage eingesetzt werden kann. Zur Vorbereitung werden beim Einsatz des Sondenkopfes 54 Bohrungen im Fels in das anstehende Gebirge abgesenkt.

Je nach der Art des Gebirges wird das Bohrloch zusätzlich mit Stahlrohren verkleidet. In diese Bohrlöcher werden Behälter eingeführt, die den Sondenkopf 54 mit den zugeordneten Verstärkereinheiten enthalten.

Der Sondenkopf 54 befindet sich am vorderen Ende eines Stahlrohres 55 und hat ein Kunststoffgehäuse 56, das durch eine Kalotte 57 in Fig. 15 nach unten abgeschlossen ist.

Das untere Ende des Stahlrohres 55 ist durch ein Kunststoffverschlußstück 58 abgedichtet. In dem Kunststoffverschlußstück 58 befindet sich ein Hohlraum 59, in den ein Zuleitungskabel 60 hineinragt und das einen Verstärker 61 enthält. Der Verstärker 61 verfügt über zwei Eingänge, von denen der erste über eine Leitung 62 mit einer Metallkugel 63 und der zweite über eine Leitung 64 mit einem Metallring 65 verbunden ist. Die Metallkugel 63 und der Metallring 65 bilden die Sondenelemente der Feldsonde des Sondenkopfes 54.

Die Metallkugel 63 ruht in einer Ausnehmung 66 eines Kunststoffteils 67. Der Raum zwischen der Kalotte 57 und dem Kunststoffteil 67 kann mit einem Öl ausgefüllt sein, das über, ein in Fig. 15 nicht dargestelltes Ventil eingefüllt werden kann.

Der Sondenkopf 54 aus Kunststoff wird je nach Ausrichtung der Bohrung entweder an einem Seil oder bei flüssigkeitsgefüllten bzw. seitlich oder aufwärts geführten Bohrlöchern zum Beispiel an Stahlrohren in die gewünschte Tiefe eingebracht.

Der Sondenkopf 54 ist über das Zuleitungskabel 60 mit einer Registrierstation in der Nähe des Bohrturmes verbunden. Über das Zuleitungskabel 60 erfolgen die Stromversorgung sowie eine Kontrolle und Überwachung des Verstärkers 61 und die Übertragung der Meßsignale.

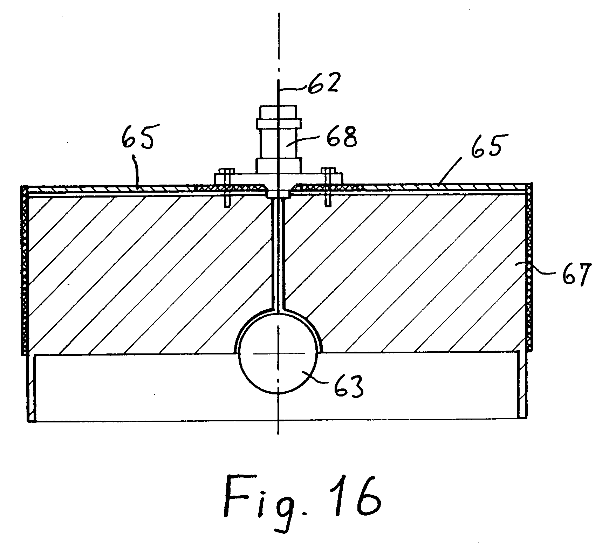

Fig. 16 veranschaulicht in etwas vergrößerter Darstellung die elektrisch wirksame Metallkugel 63 und den Metallring 65, die am Kunststoffteil 67 befestigt sind. Um die elektrische Verbindung einfach zu gestalten, ist eine Anschlußbuchse 68 mit einer Kunststoffdurchführung vorgesehen.

Der Metallring 65 hat einen Außendurchmesser, der ein Vielfaches des Metallkugeldurchmessers 63 beträgt. Die Öffnung in der Mitte des Ringes hat einen Durchmesser, der geringfügig größer als der Durchmesser der Metallkugel 63 ist. Wie man aus den Figuren 15 und 16 entnehmen kann, befindet sich die Metallkugel 63 auf der Achse durch die Öffnung des Metallrings 65 in einem seitlichen Abstand, der in etwa dem halben Durchmesser des Metallrings 65 entspricht.

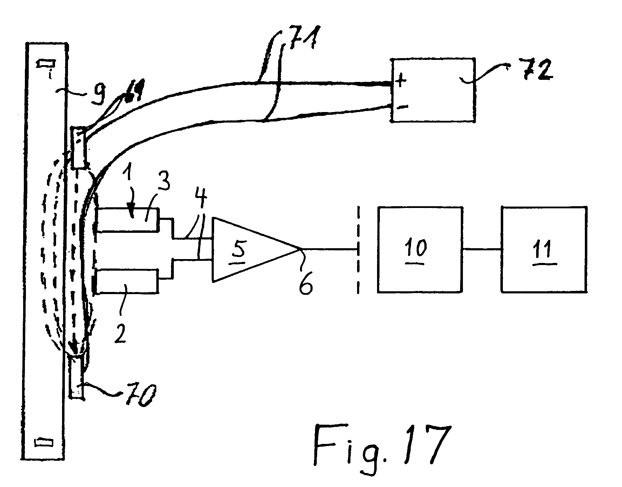

Fig. 17 zeigt eine im wesentlichen der Fig. 2 entsprechende Vorrichtung, die jedoch zusätzlich über eine Einrichtung zum Anlegen eines elektrischen Gleichfeldes verfügt. Dazu sind in der Nähe der Oberfläche des zu prüfenden Körpers 9 Elektrodenkörper 69 und 70 angeordnet, mit deren Hilfe ein elektrisches Feld erzeugbar ist, das sich im wesentlichen tangential zur Oberfläche des zu prüfenden Körpers 9 erstreckt und den in Fig. 17 erkennbaren Feldlinienverlauf hat. Die Elektroden 69, 70 sind über Leitungen 71 mit einer Gleichspannungsquelle 72 verbunden.

Die in Fig. 17 dargestellte Vorrichtung gestattet, daß die durch Risse oder Brüche verursachte Veränderung des elektrischen Feldes durch Anlegen eines elektrischen Gleichfeldes unterstützt wird, das im Bereich der zu erwartenden Risse oder Brüche während der gesamten Meß- oder Überwachungsdauer künstlich aufrechterhalten wird.

Die Elektroden 69 und 70 bestehen aus Metall oder einem sonstigen Material mit einer guten elektrischen Leitfähigkeit. Die Spannung der Gleichspannungsquelle 72 ist so gewählt, daß im Bereich der zu erwartenden Risse oder Brüche ein elektrostatisches Feld von mehr als 0,01 V/m erzeugt wird, falls der Bereich aus nichtleitendem Material besteht. Ist der Bereich elektrisch leitend, so baut sich durch die Ladungsverschiebung ein inneres Gegenfeld auf, das das äußere Feld kompensiert. In diesem Fall bezieht sich die Angabe der Feldstärke auf die Größe des inneren Gegenfeldes.

Die Gleichspannungsquelle 72 besteht aus einem elektrostatischen Energiespeicher, zum Beispiel einer Batterie, einem Generator, zum Beispiel einer Solarzelle oder einem mit Wind- oder Wasserkraft betriebenen Generator. Selbstverständlich kann die erforderliche Spannung auch mit Hilfe eines Netzgerätes von einem öffentlichen oder nichtöffentlichen elektrischen Netz bezogen werden.

Die Elektroden 69, 70 können die Gestalt von Drähten, Stäben, Folien, gekrümmten Schalen, Platten, Scheiben, Kugeln oder sonstigen Körpern haben, die über die Leitungen 71 an die beiden Ausgänge der Gleichspannungsquelle 72 angeschlossen sind.

## Patentansprüche

1. Verfahren zum Überwachen des Auftretens oder Ausbreitens von Brüchen oder Rissen in Materialien, Werkstücken, Bauteilen, Bauwerken oder Himmelskörpern, insbesondere in erdbebengefährdeten Gebieten oder bei Gebirgsbewegungen im Tunnelbau, bei dem in der Nähe des erwarteten Risses oder Bruches Veränderungen des elektrischen Feldes erfaßt und anschließend ausgewertet werden, **dadurch gekennzeichnet,** daß Veränderungen des elektrostatischen Feldes außerhalb des zu überwachenden Materials mit einer hierfür geeigneten Sonde gemessen werden, und hochfrequente Teile des Meßsignals verstärkt werden.

2. Verfahren nach Anspruch 1, dadurch gekennzeichnet, daß die Zeitpunkte, die Zeitdauern und die Häufigkeiten einzeln, gemeinsam oder in beliebiger Kombination bestimmt und ausgewertet werden, zu denen die elektrischen Feldveränderungen einen vorgegebenen Schwellenwert übersteigen.

3. Verfahren nach Anspruch 1 oder 2, dadurch gekennzeichnet, daß die Amplituden der elektrostatischen Feldveränderungen bestimmt und ausgewertet werden.

4. Verfahren nach einem der Ansprüche 1 bis 3, dadurch gekennzeichnet, daß erfaßte Einzelereignisse aufsummiert, zeitlich registriert oder statistisch ausgewertet werden.

5. Verfahren nach einem der vorstehenden Ansprüche, dadurch gekennzeichnet, daß bei Erreichen eines vorgegebenen Grenzwertes ein Alarmsignal zum Anzeigen eines Gefahrenzustandes oder eines eingetretenen Schadens erzeugt wird.

6. Verfahren nach Anspruch 1, dadurch gekennzeichnet, daß die durch Risse oder Brüche verursachte Veränderung des elektrostatischen Feldes außerhalb des zu überwachenden Materials durch Anlegen eines elektrischen Gleichfeldes unterstützt wird, das im Bereich der zu erwartenden Risse oder Brüche während der gesamten Meß- oder Überwachungsdauer künstlich aufrechterhalten wird.

7. Vorrichtung zum Überwachen des Auftretens oder Ausbreitens von Brüchen oder Rissen in Materialien, Werkstücken, Bauteilen, Bauwerken oder Himmelskörpern, insbesondere in erdbebengefährdeten Gebieten oder bei Gebirgsbewegungen im Tunnelbau, mit einer Sondenanordnung (1, 2, 3, 63, 65) zur Erfassung von in der Nähe des erwarteten Risses oder Bruches auftretenden Veränderungen des elektrischen Feldes und mit einer Aufzeichnungs- oder Auswerteeinheit (7, 8, 10, 11, 21, 22), dadurch gekennzeichnet, daß zur Erfassung von Veränderungen des elektrostatischen Feldes außerhalb des zu überwachenden Materials die Sondenanordnung wenigstens ein metallisches Sondenelement (1, 2, 3, 63, 65) oder ein Sondenelement mit ähnlich hoher elektrischer Leitfähigkeit aufweist, das vom zu überwachenden Material elektrisch isoliert ist und über einen Hochfrequenzverstärker (5, 14, 61) mit der Aufzeichnungs- oder Auswerteeinheit (7, 8, 10, 11, 21, 22) verbunden ist.

8. Vorrichtung nach Anspruch 7, dadurch gekennzeichnet, daß sie zur Erzeugung eines elektrischen Gleichfeldes wenigstens ein weiteres metallisches Sondenelement (69, 70) oder ein Element mit ähnlich guter elektrischer Leitfähigkeit aufweist, das an den Ausgang einer Gleichspannungsquelle (72) angeschlossen und so angebracht ist, daß im Bereich der zu erwartenden Risse oder Brüche während der Meß- und Überwachungszeit ein elektrostatisches Feld von mindestens 0,01 V/m erzeugt wird.

9. Vorrichtung nach Anspruch 8, dadurch gekennzeichnet, daß die Gleichspannungsquelle (72) ein elektrostatischer Energiespeicher, ein Generator oder ein Netzgerät ist.

10. Vorrichtung nach Anspruch 8 und 9, dadurch gekennzeichnet, daß zwei im Abstand isoliert voneinander angeordnete Sondenelemente (69, 70) in Gestalt von Drähten, Stäben, Folien, gekrümmten Schalen, Platten, Scheiben, Kugeln oder sonstigen Körpern vorgesehen sind, die über Leitungen (71) an die beiden Ausgänge der Gleichspannungsquelle (72) angeschlossen sind.

11. Vorrichtung nach einem der Ansprüche 7 bis 10, dadurch gekennzeichnet, daß zwei im Abstand isoliert voneinander angeordnete metallische Sondenelemente (2, 3, 63, 65) in Gestalt von Drähten, Stäben, Folien, gekrümmten Schalen, Platten, Scheiben, Kugeln oder sonstigen Körpern vorgesehen sind, die an die beiden Eingänge eines Differenzverstärkers (5, 14) angeschlossen sind.

12. Vorrichtung nach einem der Ansprüche 7 bis 11, dadurch gekennzeichnet, daß dem Verstärker (14) ein Hochpaßfilter (13) mit einer Grenzfrequenz von mehr als 100 kHz und/oder ein Störsignalsperrfilter vorgeschaltet sind.

13. Vorrichtung nach einem der Ansprüche 7 bis 12, dadurch gekennzeichnet, daß dem Verstärker (14) ein Amplitudendiskriminator (15) und ein Pulsformer (16) nachgeschaltet sind.

14. Vorrichtung nach einem der Ansprüche 7 bis 13, dadurch gekennzeichnet, daß der Ausgang (17) des Pulsformers (16) an einen Zähler (21) und/oder Rechner (18) mit einer Einheit (11) zum Anzeigen eines Gefahrenzustandes oder Schadens angeschlossen ist.

15. Vorrichtung nach Anspruch 14, dadurch gekennzeichnet, daß die Ausgänge (17 bis 20) mehreren verschiedenen und an unterschiedlichen Überwachungsstellen angeordneten Sondenelementen (1, 2, 3, 63, 65) zugeordneten Pulsformern (13 bis 16) über eine ODER-Schaltung (21) oder eine Multiplexerschaltung an den Zähler oder den Rechner (8) angeschlossen sind.

16. Vorrichtung nach einem der Ansprüche 7 bis 14, dadurch gekennzeichnet, daß die Sondenelemente (1, 2) in der Nähe von bruchgefährdeten Teilen einer Decken- oder Dachkonstruktion (23, 24, 25) eines Gebäudes angeordnet sind.

17. Vorrichtung nach einem der Ansprüche 7 bis 15, dadurch gekennzeichnet, daß die Sondenelemente (2, 3) als Halbschalenpaar ausgebildet sind, die das gefährdete Teil (27, 31, 37) entlang dessen Mantel umfassen.

18. Vorrichtung nach einem der Ansprüche 7 bis 15, dadurch gekennzeichnet, daß die Sondenelemente (1, 2) als im Abstand nebeneinander angeordnete Platten auf einem isolierten Trägermaterial (12, 52, 34, 40) aufgebracht oder in einem Gießmaterial eingegossen sind.

19. Vorrichtung nach einem der Ansprüche 7 bis 15, dadurch gekennzeichnet, daß die Sondenelemente (2, 3) als gekrümmte Elektrodenbleche ausgebildet sind, die sich entlang dem Mantel eines gefährdeten runden Teiles (27, 31, 37, 39) erstrecken.

20. Vorrichtung nach Anspruch 19, dadurch gekennzeichnet, daß die Elektrodenbleche (2, 3) in Längsrichtung des runden Teils (27, 31, 37, 39) versetzt angeordnet sind.

21. Vorrichtung nach einem der Ansprüche 7 bis 15, dadurch gekennzeichnet, daß die Sondenelemente (2, 3) aus zwei symmetrisch zueinander ausgebildeten Körpern bestehen, zwischen denen eine der Form des zu überwachenden Teils (39) angepaßte Ausnehmung (38) vorgesehen ist.

22. Vorrichtung nach einem der Ansprüche 7 bis 15, dadurch gekennzeichnet, daß die Sondenelemente (1, 2, 3) in der Nähe kritischer Stellen einer Betonbrücke (41) angeordnet sind.

23. Vorrichtung nach Anspruch 22, dadurch gekennzeichnet, daß die Sondenelemente (1, 2, 3) auf einem Brückenpfeiler aufgebracht sind.

24. Vorrichtung nach Anspruch 22, dadurch gekennzeichnet, daß die Sondenelemente (1, 2, 3) in Leerrohren (44, 48) untergebracht sind.

25. Vorrichtung nach Anspruch 22, dadurch gekennzeichnet, daß die Sondenelemente (1, 2, 3) in Brückenbeton eingegossen sind.

26. Vorrichtung nach einem der Ansprüche 7 bis 15, dadurch gekennzeichnet, daß das eine der Sondenelemente (2) als Kugel (63) und das andere (3) als Ringblech (65) ausgebildet ist, wobei die Kugel (63) auf der Ringachse im Abstand von der Ringebene angeordnet ist.

## Claims

1. Method of monitoring materials, workpieces, structural components, buildings or celestial bodies for the occurrence or propagation of fractures or cracks, particularly in territories exposed to earthquake risks or in movements in mountain masses in tunnel construction, wherein variations of the electric field in the vicinity of the crack or fracture to be expected may be detected and subsequently evaluated, **characterized** in that variations of the electrostatic field outside the material to be monitored are measured by means of an appropriate probe, and that high-frequency components of the measuring signal are amplified.

2. Method according to Claim 1, **characterized** in that the points of time, the duration and the frequencies are determined and evaluated separately, together, or in optional combinations, at which the electric field variations exceed a predetermined threshold

3. Method according to Claim 1 or 2, **characterized** in that the amplitudes of the electrostatic field variations are determined and evaluated.

4. Method according to any of Claims 1 to 3, **characterized** in that detected isolated events are added, recorded in terms of time, or evaluated by statistical methods.

5. Method according to any of the preceding Claims, **characterized** in that an alarm signal is generated as soon as a predetermined threshold is reached, for indication of a dangerous condition or of a damage which has occurred.

6. Method according to Claim 1, **characterized** in that the variation of the electrostatic field outside the material to be monitored, which are due to cracks or fractures, is supported by the application of an electric d.c. field which is artificially maintained in the zone where the cracks or fractures must be expected to occur, throughout the measuring or monitoring period.

7. Device for monitoring materials, workpieces, structural components, buildings or celestial bodies for the occurrence or propagation of fractures or cracks, particularly in territories exposed to earthquake rise or in movements in mountain masses in tunnel construction, comprising a probe array (1, 2, 3, 63, 65) for detecting variations of the electric field occuring in the vicinity of the crack or fracture to be expected, and a recording or evaluating unit (7, 8, 10, 11, 21, 22), **characterized** in that for detecting variations of the electrostatic field outside the material to be monitored the probe system comprises at least one metal probe element (1, 2, 3, 63, 65) or a probe element having a similarly high electrical conductivity, which is electrically insulated from the material to be monitored and which is connected to said recording or evaluating unit (7, 8, 10, 11, 21, 22) through a high-frequency amplifier (5, 14, 61).

8. Device according to Claim 7, **characterized** in that for generating an electric d.c. field the device comprises at least one additional metal probe element (69, 70) or an element having a similarly high electrical conductivity, which is connected to the output of a d.c. source (72) and is so mounted that an electrostatic field of at least 0.01 V/m is generated in the zone where the cracks or fractures must be expected to occur, throughout the measuring and monitoring period.

9. Device according to Claim 8, **characterized** in that said d.c. source (72) is an electrostatic energy storage means, a generator or a power pack.

10. Device according to Claims 8 and 9, **characterized** in that two mutually isolated and spaced probe elements (69, 70) are provided in the form of wires, rods, sheets, arcuate shells, plates, disks, balls or any other bodies which are connected via lines (71) to the two outputs of said d.c. source (72).

11. Device according to any of Claims 7 to 10, **characterized** in that two mutually isolated and spaced metal probe elements (2, 63, 65) are provided in the form of wires, rods, sheets, arcuate shells, plates, disks, balls or any other bodies which are connected via lines (71) to the two inputs of a differential amplifier (5, 14).

12. Device according to any of Claims 7 to 11, **characterized** in that a high-pass filter (13) having a cut-off frequency higher than 100 kHz and/or an interfering-signal band-elimination filter is connected ahead of said amplifier (14).

13. Device according to any of Claims 7 to 12, **characterized** in that an amplitude discriminator (15) and a pulse-shaping circuit (16) are connected to said amplifier (14) at the output side thereof.

14. Device according to any of Claims 7 to 13, **characterized** in that the output (17) of said pulse-shaping circuit (16) is connected to a counter (21) and/or a computer (18) comprising a unit (11) for indicating a dangerous condition or a damage.

15. Device according to Claim 14, **characterized** in that the outputs (17 to 20) of a plurality of pulse-shaping circuits (13 to 16) associated with different probe elements (1, 2, 3, 63, 65) disposed at different monitoring sites are connected via an OR gate (21) or a multiplexer circuit to said counter or computer (8).

16. Device according to any of Claims 7 to 14, **characterized** in that said probe elements (1, 2) are disposed in the vicinity of elements of a floor or roof structure (23, 24, 25) of a building, which are exposed to the risk of fracture.

17. Device according to any of Claims 7 to 15, **characterized** in that said probe elements (2, 3) are configured in the form of a pair of semimonocoques which enclose the endangered element (27, 31, 37) along the jacket thereof.

18. Device according to any of Claims 7 to 15, **characterized** in that said probe elements (1, 2) in the form of plates in spaced juxtaposition are mounted on an insulated support material (12, 52, 34, 40) or provided as cast-in elements in a molding material.

19. Device according to any of Claims 7 to 15, **characterized** in that said probe elements (2, 3) are configured as arcuate electrode sheets extending along the jacket of an endangered round element (27, 31, 37, 39).

20. Device according to Claim 19, **characterized** in that said electrode sheets (2, 3) are disposed with an offset in the longitudinal extension of said round element (27, 31, 37, 39).

21. Device according to any of Claims 7 to 15, **characterized** in that said probe elements (2, 3) are formed by two symmetrically configured bodies enclosing a recess (38) therebetween which is matched with the shape of the part (39) to be monitored.

22. Device according to any of Claims 7 to 15, **characterized** in that said probe elements (1, 2, 3) are disposed in the vicinity of critical points on a concrete bridge (41).

23. Device according to Claim 22, **characterized** in that said probe elements (1, 2, 3) are mounted on a bridge pier.

24. Device according to Claim 22, **characterized** in that said probe elements (1, 2, 3) are accommodated in empty tubes (44, 48).

25. Device according to Claim 22, **characterized** in that said probe elements (1, 2, 3) are cast in the bridge concrete.

26. Device according to any of Claims 7 to 15, **characterized** in that one (2) of said probe elements is configured as a ball (63) while the other one (3) is formed as an annular metal sheet (65), with said ball (63) being disposed on the axis of said ring at a spacing from the ring plane.

## Revendications

1. Procédé à surveiller des matières, pièces à usiner, des éléments de construction, bâtiments et constructions, ou des corps célestes pour détecter l'apparition ou la propagation de ruptures ou fissures, en particulier dans des régions en danger des tremblements de terre ou au cas des mouvements de terrains dans la construction de tunnels, dans lequel on peut détecter et ensuite évaluer des variations du champ électrique à proximité de la fissure ou rupture de toute attente, **caractérisé** en ce que que des variations du champ électrostatique en dehors de la matière à surveiller sont mesurées moyennant un probe approprié, et que des composantes HF du signal de mesure sont amplifiées.

2. Procédé selon la revendication 1, **caractérisé** en ce que les points de temps, la durée et les fréquences sont détectés et évalués en particulier, ensemble ou en combinaisons à volonté, auxquels les variations du champ électrique dépassent un seuil défini.

3. Procédé selon la revendication 1 or 2, **caractérisé** en ce que les amplitudes des variations du champ électrostatique sont détectées et évaluées.

4. Procédé selon une quelconque des revendications 1 à 3, **caractérisé** en ce que des évènements séparés détectés sont totalisés, enregistrés en fonction du temps, ou évalués statistiquement.

5. Procédé selon une quelconque des revendications précédentes, **caractérisé** en ce qu'un signal d'avertissement est engendré dès qu'un seuil défini est atteint, pour avertir un état dangereux ou l'apparition de dégâts.

6. Procédé selon la revendication 1, **caractérisé** en ce que la variation du champ électrostatique en dehors de la matière à surveiller, qui est causée par des fissures ou ruptures, est aidée par l'application d'un champ électrique continu qui est artificiellement maintenu dans la zone où on doit s'attendre à l'apparition de fissures ou ruptures, pendant toute la période de mesure ou surveillance.

7. Dispositif à surveiller des matières, pièces à usiner, des éléments de construction, bâtiments et constructions, ou des corps célestes pour détecter l'apparition ou la propagation de ruptures ou fissures, en particulier dans des régions en danger des tremblements de terre ou au cas des mouvements de terrains dans la construction de tunnels, qui comprend un système de sondes (1, 2, 3, 63, 65) pour détecter des variations du champ électrique qui s'apparaissent à proximité de la fissure ou rupture à attendre, et une unité d'enregistrement ou d'évaluation (7, 8, 10, 11, 21, 22), **caractérisé** en ce que pour la détection des variations du champ électrostatique en dehors de la matière à surveiller, le système de sondes comprend au moins un élément de sonde métaliique (1, 2, 3, 63, 65) ou un élément de sonde à conductivité électrique semblable, qui est électriquement isolé de la matière à surveiller et qui est relié à ladite unité d'enregistrement ou d'évaluation (7, 8, 10, 11, 21, 22), par un amplificateur HF (5, 14, 61). (5, 14, 61).

8. Dispositif selon la revendication 7, **caractérisé** en ce que, pour l'établissement d'un champ électrique continu, le dispositif comprend au moins un élément de sonde (69, 70) métallique supplémentaire ou un élément à conductivité électrique semblable, qui est raccordé à la sortie d'une source de tension courante (72) et qui est installé de façon qu'un champ électrostatique à au moins 0,01 V/m soit établi dans la zone où on doit s'attendre à l'apparition de fissures ou ruptures, pendant toute la période de mesure et de surveillance.

9. Dispositif selon la revendication 8, **caractérisé** en ce que ladite source de tension continue (72) est un accomulateur d'énergie électrostatique, un générateur ou un poste-secteur.

10. Dispositif selon les revendications 8 et 9, **caractérisé** en ce que deux éléments de sonde (69, 70), séparés et écartés l'un de l'autre, sont prévus sous forme de fils, barres, feuilles, coques cintrées, plaques, disques, billes ou tout autre corps, qui sont raccordés, moyennant des lignes (71), aux deux sorties de ladite source de tension continue (72).

11. Dispositif selon une quelconque des revendications 7 à 10, **caractérisé** en ce que deux éléments de sonde (2, 63, 65), séparés et écartés l'un de l'autre, sont prévus sous forme de fils, barres, feuilles, coques cintrées, plaques, disques, billes ou tout autre corps, qui sont raccordés, moyennant des lignes (71), aux deux entrées d'un amplificateur différentiel (5, 14).

12. Dispositif selon une quelconque des revendications 7 à 11, **caractérisé** en ce qu'un filtre passe-haut (13) à une fréquence limite plus haute que 100 kHz et/ou un filtre éliminateur de bande pour éliminer des signaux de bruits est raccordé en amont dudit amplificateur (14).

13. Dispositif selon une quelconque des revendications 7 à 12, **caractérisé** en ce qu'un discriminateur d'amplitude (15) et un formateur des impulsions (16) sont raccordés en aval dudit amplificateur (14).

14. Dispositif selon une quelconque des revendications 7 à 13, **caractérisé** en ce que la sortie (17) dudit formateur des impulsions (16) est reliée à un compteur (21) et/ou un ordinateur (18) avec une unité (11) d'avertissement d'un état dangereux ou de dégâts.

15. Dispositif selon la revendication 14, **caractérisé** en ce que les sorties (17 à 20) d'une pluralité de formateurs d'impulsions (13 à 16) affectés aux divers éléments de sende (1, 2 3, 63, 65) disposés aux points différents de surveillance sont reliées, via un élément OU (21), ou un circuit multiplexeur, audit compteur ou ordinateur (8).

16. Dispositif selon une quelconque des revendications 7 à 14, **caractérisé** en ce que lesdits éléments de sonde (1, 2) sont dispoés à proximité des éléments d'une construction de plancher, plafond ou toit (23, 24, 25) d'un bâtiment, lesquels éléments sont exposé au risque de rupture.

17. Dispositif selon une quelconque des revendications 7 à 15, **caractérisé** en ce que lesdits éléments de sonde (2, 3) sont configurés sous forme d'une paire de semi-monocoques qui enferment l'élément en danger (27, 31, 37) le long de l'enveloppe du dernier.

18. Dispositif selon une quelconque des revendications 7 à 15, **caractérisé** en ce que lesdits éléments de sonde (1, 2) sous forme de plaques écartées et à côté l'une de l'autre sont montés sur un matériau de support isolé (12, 52, 34, 40) ou incorporés, en y faisant corps, dans une matière de coulée.

19. Dispositif selon une quelconque des revendications 7 à 15, **caractérisé** en ce que lesdits éléments de sonde (2, 3) sont configurés sous forme de plaques d'électrode métalliques qui s'étendent le long de l'enveloppe d'un élément rond en danger (27, 31, 37, 39).

20. Dispositif selon la revendication 19, **caractérisé** en ce que lesdites plaques d'électrode métalliques (2, 3) sont disposées à déport le long de l'axe longitudinal dudit élément rond (27, 31, 37, 39).

21. Dispositif selon une quelconque des revendications 7 à 15, **caractérisé** en ce que lesdits éléments de sonde (2, 3) sont formés par deux corps à configuration symétrique, qui enferment un évidement (38) y entre qui est épousé à la forme de l'élément (39) à surveiller.

22. Dispositif selon une quelconque des revendications 7 à 15, **caractérisé** en ce que lesdits éléments de sonde (1, 2, 3) sont disposés à proximité des points critiques sur un pont en béton (41).

23. Dispositif selon la revendication 22, **caractérisé** en ce que lesdits éléments de sonde (1, 2, 3) sont montés sur une pile du pont

24. Dispositif selon la revendication 22, **caractérisé** en ce que lesdits éléments de sonde (1, 2, 3) sont reçus dans des conduites vides (44, 48).

25. Dispositif selon la revendication 22, **caractérisé** en ce que lesdits éléments de sonde (1, 2, 3) sont coulés dans le béton dont le pont est coulé.

26. Dispositif selon une quelconque des revendications 7 à 15, **caractérisé** en ce qu'un (2) desdits éléments de sonde est prévu sous forme d'une bille (63) pendant que l'autre est formé en tant qu'un disque annulaire métallique (65), ladite bille (63) étant disposée sur l'axe dudit anneau à un écart du plan de l'anneau.
